# EUROPEAN PATENT SPECIFICATION

(11) **EP 3 035 661 B1**
(45) Date of publication and mention of the grant of the patent: **17.07.2019**
(21) Application number: 15460121.5
(22) Date of filing: 17.12.2015
(51) Int. Cl.: H04M 3/30

(54) **A METHOD FOR VERIFYING A PORT SYNCHRONISATION**
VERFAHREN ZUR VERIFIZIERUNG EINER PORTSYNCHRONISATION
PROCÉDÉ PERMETTANT DE VÉRIFIER UNE SYNCHRONISATION DE PORT

(30) Priority: 18.12.2014 PL 41061314
(43) Date of publication of application: 22.06.2016
(73) Proprietor: Orange Polska S.A., 02-326 Warszawa (PL)
(72) Inventor: Zych, Piotr, 02-673 Warszawa (PL); Zawadzki, Konrad, 03-149 Warszawa (PL); Ratkiewicz, Marcin, 02-732 Warszawa (PL); Malysz, Krzysztof, 20-543 Lublin (PL); Staniszewski, Robert, 02-306 Warszawa (PL)
(74) Representative: Palka, Grazyna

(56) References cited:
- CN-A- 1 564 571
- "Asymmetrical digital subscriber line (ADSL) transceivers; G.992.1 (07/99)", ITU-T STANDARD IN FORCE (I), INTERNATIONAL TELECOMMUNICATION UNION, GENEVA, CH, no. G.992.1 (07/99), 2 July 1999 (1999-07-02), XP017401211,

## Description

The object of the invention is a method for verifying a port synchronisation for technologies of a family of DSL (Digital Subscriber Line) standards, i.e. a technique of an asymmetric digital subscriber line (Asymmetric Digital Subscriber Line, ADSL) and its subsequent versions ADSL2 and ADSL2+, as well as a technique of a digital subscriber line of very high bit bandwidth (Very High Speed DSL 2, VDSL2).

Obtaining the DSL synchronisation and the possibility of its verification are necessary conditions to verify the proper operation of equipment and performance of services, for example during the installation of a subscriber line.

From the patent application US 20040264961 A1 there is known a system having an optical network terminal, arranged on the subscriber side in Ethernet, to adapt TDM subscriber and/or VDSL subscriber. This solution is used in subscriber access networks. Traffic in POTS service is converted into digital data, in order to convert digital data into a packet and to transmit a packet to an Ethernet network. From the packet there is extracted synchronisation information in numerical form, then it is compared with pre-recorded synchronisation information. The described process of receiving synchronisation information is executed repeatedly, once the synchronisation information is received from the OLT connected to a PSDN/IP network. In this embodiment, there are two pieces of numeric synchronisation information, obtained at various time intervals. These pieces of information are then compared and the difference in value between the numerical values is determined.

The procedures for obtaining synchronisation in xDSL technologies are known, for example, from the ITU-T standards, e.g. G.992.1 "SERIES G: TRANSMISSION SYSTEMS AND MEDIA, DIGITAL SYSTEMS AND NETWORKS, Digital sections and digital line system, Access networks, Test procedures for digital subscriber line (DSL) transceivers", especially Subsection 10 "Initialisation" and Annex D, as well as standards G.992.3, G.992.4, G.992.5, G.994.1, G.996.1, G.997.1, G.998.4.

The Patent publication CN1564571 discloses another example of prior art system to verify port synchronisation.

Standard parameters available on devices do not give the opportunity to gather additional information in case there are problems with establishing the synchronisation. An available parameter of the management model MIB-II (RFC2863) ifOperState, as well as analogical parameters available directly on device, allows a one-time verification of whether the line is synchronised or not. Due to the fact that the process of establishing the synchronisation itself is lengthy and lasts from 20 to 120 seconds, the moment in which a parameter informing about establishing the synchronisation (e.g. the mentioned ifOperState from the model MIB-II) is read is very important. Reading the information at an inappropriate moment results in a major error in data analysis. A single reading of the parameter before establishing the synchronisation results in that the systems can consider the line not synchronised at the moment when in several seconds the process of establishing the synchronisation ends and the result will be totally different. A major problem of this process is the absence of a parameter that could show the start time of the synchronisation procedure, so one could refer to it while reading. In addition, in case that for some reason establishing the synchronisation is not possible, the standard available parameters do not allow to verify with a single request if there is no network terminal (CPE, i.e. a modem) connected to the port, or if the terminal is visible, but for some reason the synchronisation cannot be established. There are available the counters of full synchronisation attempts (successful and unsuccessful, Full Initialisation Counter) and the counter of failed synchronisation attempts (Failed Full Initialisation Counter), but such a counter is counting over a some period of time and a single reading does not allow interpreting it because it is unknown in which moment the values have been counted (they could be counted in advance for other reasons). In addition, the mechanisms available in standard allow a static configuration of the port in accordance with the defined requirements of the synchronisation parameters, but when these requirements cannot be met there is no mechanism to assess which one of them is causing the problem and how much is missing to achieve a correct synchronisation.

A method for verifying a port synchronisation according to the invention is provided by the appended claim 1. Preferred embodiments are provided by appended claims 2-12.

The solution according to the invention allows, inter alia, the elimination of a major error of the measurement caused by reading the parameters in a wrong moment, and the initial diagnosis of the subscriber line showing the synchronisation status for basic and emergency configuration, which is not possible on the basis of a single reading of the parameters in the currently known standards.

The solution may be used by telecom service providers having their own access networks with active telecommunication devices, DSLAM, OLT, service providers based on infrastructure made available to them (BSA - Bit Stream Access; LLU - Local Loop Unbundling), as well as units which are subcontractors for the aforementioned entities.

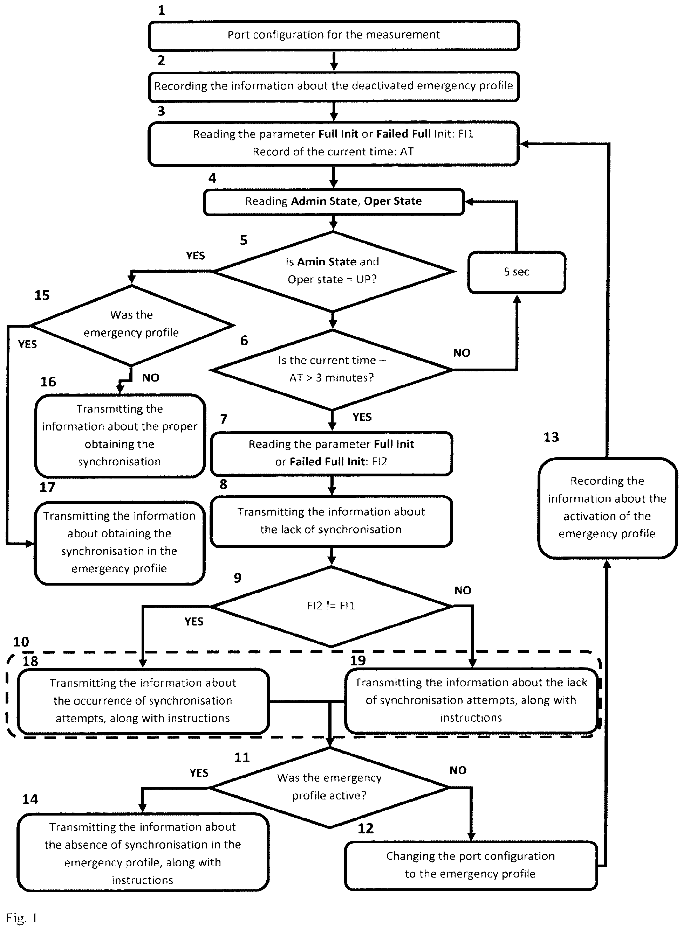

The object of the invention is shown in the embodiment in the drawing, in which Fig. 1 shows a block diagram of the particular steps of the method.

The particular steps of the method for verifying the synchronisation of the port are shown in Fig. 1. Upon receiving by the system a request transmitted by the unit that issues measurement requests, the server, on the basis of data contained in the request for the initialisation, is awaiting at the indicated resource to achieve the synchronisation.

The unit that issues measurement requests may for example be: a software module (implementation in the form of e.g. a software library, a packet, a separate namespace), a hardware module (e.g. a hardware implementation as part of the meter of the line), an independent separate system (then the method is implemented in the form of a separate, independent existence, and communication takes place remotely using e.g. WebService, RMI, HTTP and other ways). The most common example of implementation is a software module that can be e.g. a component of the system in the form of a platform described further in embodiments and solutions for the installation, maintenance and qualification of the subscriber line, submitted by the Applicant as parallel applications. The software module can also be used on network devices themselves (such as DSLAM, a modem) for verification of establishing the synchronisation. The implementation in the hardware form is essential for the use in the meters that use FPGA programmable circuits. Implementation in the form of an independent system allows to share functionality to other systems from one central location.

The essential parameters are:
- administrative status (IfAdminStatus, hereinafter referred to as Administrative State or Admin State or AS) - the parameter defined in RFC2863, Section 3.1.13; the parameter allowing to administer a given resource (e.g. port), as well as to activate and deactivate the port (turning on/off);
- operational status of physical port (IfOperStatus, hereinafter referred to as Operational State or Oper State or OS) - the parameter defined in RFC2863, Section 3.1.13, which informs whether the subscriber line is operating; this criterion is fulfilled if the subscriber line is operating;
- the number of synchronisation attempts (Full Initialisation Counter, Full Init, FI, ITU-T G.997.1);
- the number of failed synchronisation attempts (Failed Full Initialisation Counter, Failed Full Init, FFI, ITU-T G.997.1).

Both above parameters FI and FFI are referred to with a common term as the parameter of synchronisation attempts (due to the fact that in the method they serve the same function, and one parameter selected at the beginning of the method is used).

First, through the system, the port for the measurement is configured at step 1, if the devices used in the measurement allow it, the mode Loop Diagnostic Mode is activated and the resynchronisation is forced, and in the system at step 2 there is recorded the information about the inactive emergency profile (Emergency), in other words about the absence of activation of the emergency profile.

The emergency profile has been defined for the purposes of the present solution. The requirements defined in this profile, concerning minimum uplink and downlink bitrates needed to achieve during the synchronisation, are reduced to the lowest possible value, which is zero, or to the lowest value that the device allows to configure (often it is 128 kbit/s). In contrast, the requirements concerning maximum uplink and downlink bitrates needed to achieve during the synchronisation are set to the maximum possible value that the device allows to configure. The rest of the parameters of that profile (e.g. minimum and maximum signal to noise ratio, an acceptable BER error rate, etc.) is identical as in the service profiles, making the emergency profile identical as the service ones, except the bitrate ranges, the maximum extension of which allows it to synchronise for most of the lines. In other words, the emergency profile has defined settings with which it is possible to achieve the synchronisation on the line of any features for the measurement of these characteristics in the case when the standard settings dedicated to provide services do not allow to achieve the synchronisation.

Then, at the appropriate time, at step 3, through the system, the number of synchronisation attempts (FI1) is read and the current time is recorded in a memory (e.g. in a database). In another embodiment, at step 3 the number of failed the synchronisation attempts is read. Next, through the system, at step 4 the administrative status is read, as well as the operational status, and they are compared at step 5 with the reference value UP (active). In the absence of compliance with a reference value, i.e. in the event of a negative result of the comparison, at step 6 the current time is measured and it is checked whether the difference between the current time and the time measured at step 3 of reading is smaller than 3 minutes. If the difference does not exceed 3 minutes, the system waits for another 5 seconds and returns to step 4 of reading the values of the administrative status and the operational status, and the system performs the successive steps again. In contrast, in the embodiment in which there is no compliance with the reference value (UP), and when the time difference exceeds 3 minutes, through the system at step 7 the number of the synchronisation attempts - FI2 (or in another embodiment - the number of failed synchronisation attempts) is read once again and at step 8 the information about the absence of synchronisation is transmitted to the unit that issues measurement requests.

Then the read value of the parameters FI1, FI2 associated with numbers of synchronisation attempts at different times are compared at step 9, and at step 10 there is transmitted the information about the port status along with instructions. When the value FI2 measured at a later point in time is greater than the earlier value FI1, then to the unit that issues measurement requests, along with instructions at step 18, there is transmitted the information about the occurrence of synchronisation attempts to check the quality of the connection, or whether there is no discontinuity in the connection. In another embodiment, when the value FI2 measured at a later point in time is lower than the earlier value FI1, then to the unit that issues measurement requests, along with instructions at step 19, there is transmitted the information about the absence of synchronisation attempts to check whether there is no discontinuity in the connection.

Next, through the system, at step 11 there is checked the state of activation of the emergency profile. If the emergency profile is inactive, then, through the system, at step 12 the emergency profile is activated, i.e. the DSL physical layer is reconfigured, and at step 13 the information about the activation of the emergency profile is recorded in the system. Then the system returns to step 3 of reading and repeats the entire method from the moment of the first reading of the Full Init parameters (or Failed Full Init, depending on which of the parameters has been selected at step 3) at step 3. If, in turn, the emergency profile is activated, then to the unit that issues measurement requests at step 14 there is transmitted the message about the absence of synchronisation, following the earlier instructions and repeating the measurement. Exemplary instructions are: the information about the absence of the synchronisation in the emergency profile, the information about serious damage to the line when the synchronisation attempts take place on the line, or the information about the discontinuity on the line when there are no synchronisation attempts.

In a situation where the result of the comparison at step 5 of the value of the administrative status and the operational status with the reference value (UP) is positive, through the system, at step 15, it is checked whether the emergency profile is activated, and if the result is negative, to the unit that issues measurement requests at step 16 there is transmitted the information about obtaining the synchronisation. In contrast, when the emergency profile is activated, to the unit that issues measurement requests at step 17 there is transmitted the information about obtaining the synchronisation with the emergency profile activated, i.e. in the emergency profile.

Whole method for verifying the port the synchronisation is performed maximum twice. In the case of absence of synchronisation the system tries to automatically reconfigure to the emergency profile in order to assess the real capabilities of the subscriber line.
**Example 1** of an embodiment of the method for verifying the synchronisation with the correct synchronisation:
   - turning on the mode Loop Diagnostic Mode and forcing the resynchronisation of the line;
   - recording at step 2 the information about the inactive emergency profile (EMERGENCY = NO);
   - reading at step 3 the parameter Full Init (FI1) and recording the current time (AT); values: FI1 = 4, AT = 2014-11-28 08:54:23;
   - reading at step 4 the parameters AS and OS;
   - comparing at step 5 the values of AS and OS with the value of UP: AS = UP, OS = DOWN;
   - comparing at step 6 the difference of the current time (2014-11-28 08:54:23) and AT with 3 minutes, the result of the comparison has not exceeded the threshold of 3 minutes;
   - waiting 5 seconds;
   - cyclic reading at step 4 AS and OS for the next 12 readings (readings no. 2-13) every 5 seconds and comparing at step 5 with the value of UP gives the results: AS = UP, OS = DOWN;
      due to the time interval of 5 seconds between measurements, 12 measurements do not exceed the threshold of 3 minutes, so the method up to this moment remains in the loop of data reading;
   - reading no. 14 gives the results: AS = UP, OS = UP, which causes exiting the loop, because step 5 of the comparison at reading no. 14 is completed positively;
   - since the emergency profile has the value NO, hence to the technician working with the unit that issues measurement requests (the device that issues measurement requests) at step 16 there is transmitted the information about obtaining the synchronisation.
**Example 2** of an embodiment of the method for verifying the synchronisation (the result is the synchronisation in the emergency profile, the synchronisation attempts take place on the port):
   - turning on the Loop Diagnostic Mode and forcing the resynchronisation of the line;
   - recording at step 2 the information about the inactive emergency profile (EMERGENCY = NO);
   - reading at step 3 the parameter Full Init (FI1) and recording the current time (AT); values: FI1 = 4, AT = 2014-11-28 08:54:23;
   - reading at step 4 the AS and OS parameters;
   - comparing at step 5 the values of AS and OS with the value of UP: AS = UP, OS = DOWN;
   - comparing at step 6 the difference of the current time (2014-11-28 08:54:23) and AT with 3 minutes, the result of the comparison has not exceeded the threshold of 3 minutes;
   - waiting 5 seconds;
   - cyclic reading at step 4 AS and OS for the next 36 readings (readings no. 2-37) every 5 seconds and comparing at step 5 with the value of UP gives the results: AS = UP, OS = DOWN;
      Due to the time interval between measurements (5 seconds), 36 measurements result in exceeding the threshold of 3 minutes, which causes interruption of the loop;
   - reading at step 7 the parameter Full Init (FI2): FI2 = 8;
   - to the technician working with the unit that issues measurement requests at step 8 there is transmitted the information about the absence of synchronisation;
   - comparing at step 9 the values FI1 and FI2, and because FI2 is greater than FI1, therefore, to the technician at step 18 there is transmitted the information about the synchronisation attempts occurring on the port.
   - checking at step 11 whether the emergency profile is activated, and since the emergency profile has the value NO, the method proceeds at step 12 to the change of the port configuration, i.e. the emergency profile is activated;
   - recording at step 13 the information about the change of the emergency profile (change of the value of the EMERGENCY profile to YES);
   - reading at step 3 the parameter Full Init (FI1) and recording the current time (AT); values: FI1 = 8, AT = 2014-11-28 08:57:23;
   - reading at step 4 AS and OS - reading no. 1a;
   - comparing at step 5 the values of AS and OS with the value of UP: AS = UP, OS = DOWN;
   - comparing at step 6 the difference of the current time (2014-11-28 08:57:23) and AT with 3 minutes, the result of the comparison has not exceeded the threshold of 3 minutes;
   - waiting 5 seconds;
   - cyclic reading at step 4 AS and OS for the next 12 readings (readings no. 2a-13a) every 5 seconds and comparing at step 5 with the value of UP gives the results: AS = UP, OS = DOWN;
      Due to the time interval between measurements (5 seconds), 12 measurements do not exceed the threshold of 3 minutes, so the method up to this moment remains in the loop of data reading;
   - reading no. 14a gives the results: AS = UP, OS = UP, which causes exiting the loop;
   - since the emergency profile has the value YES (the profile is activated), hence to the technician at step 17 there is transmitted the information about obtaining the synchronisation, but only in the emergency profile, which is a negative result of the method.
**Example 3** of an embodiment of the method for verifying the synchronisation (the result is a total absence of synchronisation, but synchronisation attempts take place):
   - turning on the Loop Diagnostic Mode and forcing the resynchronisation of the line;
   - recording at step 2 the information about the inactive emergency profile (EMERGENCY = NO);
   - reading at step 3 the parameter Full Init (FI1) and recording the current time (AT), values: FI1 = 4, AT = 2014-11-28 08:54:23;
   - reading at step 4 the AS and OS parameters - reading no. 1;
   - comparing at step 5 the values of AS and OS with the value of UP: AS = UP, OS = DOWN;
   - comparing at step 6 the difference of the current time (2014-11-28 08:54:23) and AT with 3 minutes, the result of the comparison has not exceeded the threshold of 3 minutes;
   - waiting 5 seconds;
   - cyclic reading at step 4 AS and OS for the next 36 readings (readings no. 2-37) every 5 seconds and comparing at step 5 with the value of UP gives the following results: AS = UP, OS = DOWN;
      Due to the time interval of 5 seconds between measurements, 36 measurements exceed the threshold of 3 minutes, which causes interruption of the loop;
   - reading at step 7 the parameter Full Init (FI2): FI2 = 8;
   - transferring at step 8 to the technician the information about the absence of synchronisation;
   - comparing at step 9 FI1 with FI2, and because FI2 is greater than FI1, therefore, to the technician at step 18 there is transmitted the information about the synchronisation attempts occurring on the port;
   - checking at step 11 whether the emergency profile is activated, and since the value of the emergency profile is NO, the method proceeds at step 12 to the change of the port configuration to the emergency profile;
   - recording at step 13 the information about the change of the emergency profile (change of the value of the EMERGENCY profile to YES);
   - reading at step 3 the parameter Full Init (FI1) and recording the current time (AT); values: FI1 = 8, AT = 2014-11-28 08:57:23;
   - reading at step 4 AS and OS - reading no. 1a;
   - comparing at step 5 the values of AS and OS with the value of UP: AS = UP, OS = DOWN;
   - comparing at step 6 the difference of the current time (2014-11-28 08:57:23) and AT with 3 minutes, the result of the comparison has not exceeded the threshold of 3 minutes;
   - waiting 5 seconds;
   - cyclic reading at step 4 AS and OS for the next 36 readings (readings no. 2a-37a) every 5 seconds and comparing at step 5 with the value of UP gives the following results: AS = UP, OS = DOWN;
      Due to the time interval between measurements (5 seconds), 36 measurements result in exceeding the threshold of 3 minutes, which causes interruption of the loop;
   - reading at step 7 the parameter Full Init (FI2): FI2 = 12;
   - transferring at step 8 to the technician the information about the absence of synchronisation;
   - comparing at step 9 the values FI1 and FI2, because FI2 is greater than FI1, therefore, to the technician at step 18 there is transmitted the information about the synchronisation attempts occurring on the port;
   - checking at step 11 whether the emergency profile is activated, and since the emergency profile has the value YES, hence to the technician at step 14 there is transmitted the information about the absence of the synchronisation in the emergency profile.
**Example 4** of an embodiment of the method for verifying the synchronisation (in which the result is a total absence of the synchronisation, with the absence of synchronisation attempts):
   - turning on the Loop Diagnostic Mode and forcing the resynchronisation of the line;
   - recording at step 2 the information about the inactive emergency profile (EMERGENCY = NO);
   - reading at step 3 the parameter Full Init (FI1) and recording the current time (AT); values: FI1 = 4, AT = 2014-11-28 08:54:23;
   - reading at step 4 the AS and OS parameters - reading no. 1;
   - comparing at step 5 the values of AS and OS with the value of UP: AS = UP, OS = DOWN;
   - comparing at step 6 the difference of the current time (2014-11-28 08:54:23) and AT with 3 minutes, the result of the comparison has not exceeded the threshold of 3 minutes;
   - waiting 5 seconds;
   - cyclic reading at step 4 AS and OS for the next 36 readings (readings no. 2-37) every 5 seconds and comparing at step 5 with the value of UP gives the results: AS = UP, OS = DOWN;
      Due to the time interval between measurements (5 seconds), 36 measurements result in exceeding the threshold of 3 minutes, which causes interruption of the loop;
   - reading at step 7 the parameter Full Init (FI2): FI2 = 4;
   - transferring at step 8 to the technician the information about the absence of synchronisation;
   - comparing at step 9 the values FI1 and FI2, and because FI2 is not greater than FI1, therefore, to the technician at step 19 there is transmitted the information about the absence of synchronisation attempts on the port;
   - checking at step 11 whether the emergency profile is activated, and since the emergency profile has the value NO, the method proceeds at step 12 to the change of the port configuration to the emergency profile;
   - recording at step 13 the information about the change of the emergency profile (change of the value of the emergency parameter to YES);
   - reading at step 3 the parameter Full Init (FI1) and recording the current time (AT); values: FI1 = 4, AT = 2014-11-28 08:57:23;
   - reading at step 4 AS and OS - reading no. 1a;
   - comparing at step 5 the values of AS and OS with the value of UP: AS = UP, OS = DOWN;
   - comparing at step 6 the difference of the current time (2014-11-28 08:57:23) and AT with 3 minutes, the result of the comparison does not exceed the threshold of 3 minutes;
   - waiting 5 seconds;
   - cyclic reading at step 4 AS and OS for the next 36 readings (readings no. 2a-37a) every 5 seconds and comparing at step 5 with the value of UP gives the results: AS = UP, OS = DOWN;
      Due to the time interval between measurements (5 seconds), 36 measurements result in exceeding the threshold of 3 minutes, which causes interruption of the loop;
   - reading at step 7 the parameter Full Init (FI2): FI2 = 4;
   - transferring at step 8 to the technician the information about the absence of synchronisation;
   - comparing at step 9 the values FI1 and FI2, and because FI2 is not greater than FI1, therefore, to the technician at step 19 there is transmitted the information about the absence of synchronisation attempts on the port;
   - checking at step 11 whether the emergency profile is activated, and since the emergency profile has the value YES, hence to the technician at step 14 there is transmitted the information about the absence of synchronisation in the emergency profile.

The emergency profile applied in the solution has the settings allowing the synchronisation of the modem for virtually any subscriber line (short, long, damaged, undamaged). As a result, when a standard service profile does not allow for obtaining the synchronisation, it is possible to find out the real capabilities of the line, diagnose it, decide what and how to repair, and transmit a recommendation.

The presented in the embodiments threshold value of 3 minutes of waiting for the synchronisation results from the fact that it is a time in which the synchronisation can be surely established if possible (which results from the standard procedures of establishing the DSL synchronisation). In contrast, the interval of 5 seconds was chosen as the optimal interval of transmitting requests to the DSLAM / OLT device so that the device was not overloaded with too many requests, but also to allow for a quick response to obtaining the synchronisation, without having to wait in every case full three minutes, if the devices establish the synchronisation earlier (e.g. at the moment when the modem synchronises after 27 seconds, then after 30 seconds the waiting can be stopped).

An important feature of the invention is integration of the process of waiting for the synchronisation with reading the parameter of the synchronisation attempts (FI and FFI, in the presented embodiment FI1 and FI2) in the respectively selected moments in time, which resulted in the ability to perform these operations in parallel. Reading and comparing the parameter of synchronisation attempts (in the presented embodiment FI1 and FI2) makes it possible to determine in the event when after 3 minutes of synchronisation it fails to establish whether the modem is visible for the DSLAM device, i.e. whether the connection is made properly and whether there is no discontinuity in it, because if there is such a visibility, then the devices try to synchronise and the selected counter of synchronisation attempts will increase over the time of maximum measurement of 3 minutes (in the event of absence of synchronisation, the window of 3 minutes is always achieved). If the counter is increasing this means that there is the visibility of the equipment. If the counter is not increasing, it can be concluded that there is a discontinuity on the line. Without such comparison with the interval of 3 minutes it is not possible.

Additionally, in the solution according to the invention the emergency profile is activated when it fails to obtain the synchronisation on the standard parameters. For this reason, the configuration is changed and on the emergency profile the 3-minute waiting for the synchronisation of the modem is repeated once more. If the synchronisation in the emergency profile is successful, the technician working with the unit that issues measurement requests can read the parameters and determine how much the synchronisation parameters differ from those that would occur for the standard profile. On this basis it is possible to direct repair works or determine that the line cannot be repaired. For example, if the standard profile needs to achieve a minimum bitrate of the line of 10 Mbit/s, and the emergency profile allows the synchronisation from 1 Mbit/s, it is known that it is easier to achieve the proper bitrate on the latter profile. If the line does not synchronise in the standard profile, this means that it cannot reach 10 Mbit/s, but on the emergency profile, for example, it reaches 9.5 Mbit/s. Since so little is missing to achieve the bitrate of 10 Mbit/s, such a situation may be caused by the increased suppression caused by damage that the technician can easily find and remove or change the place of the modem connection. If on the emergency profile the line reaches the bitrate of 2 Mbit/s, this means that due to the large difference with 10 Mbit/s the activation of the service of the bitrate of 10Mbit/s will be difficult and will require a considerable intervention on the line or will not be possible at all. While waiting for the synchronisation on the emergency profile the parameters FI2 and FI1 are compared to determine whether the line is not interrupted.

The method for verifying the port synchronisation can be carried out via any application, any system, can also be carried out on a manual meter. An exemplary system may be the system in the form of a platform which comprises:
a) the application server, such as Tomcat, GlassFish, JBoss Application Server;
b) the application running on the application server, which receives messages initiating the implementation of the method, coordinates the particular steps of the method, transmits results and feedback. The application has multiple interfaces to third party systems, such as:
   - the interface to the inventory system (retrieving inventory data about the service);
   - the interface to the prequalification system (exporting measurement data for the purposes of prequalification);
   - the interface to the SMS gateway for retrieving messages transmitted by technicians (initiating measurements) and transmitting the replies;
   - the WebService type interface allowing initialisation of measurements and transmitting results to other systems;
   - the interface to the database;
   - the Web type interface for users allowing browsing the measurement results.
c) the database for storing the results of implementation of the method and other data (a list of system users, their logins, passwords). The database constitutes a repository of the results of the measurements that have been performed. It additionally comprises a record of the instructions that have been transmitted.

The application server is responsible for:
- remote communication with the technician working with the unit that issues measurement requests which may take place with the use of either text messages or data transmission;
- communication with the active network devices (e.g. DSLAM, OLT), using management protocols supported by them;
- analysis of data collected from network devices;
- writing data to the database, which constitutes a repository of results;
- based on the collected data, announcing the verdict for further instructions for the technician working with the unit that issues measurement requests.

The customer premises equipment is not a direct component of the system, but is one of the key and necessary components allowing the implementation of the method for verifying the synchronisation. The customer premises equipment is responsible for termination of the signal from the access network. It can be an xDSL (ADSL2/2+, SHDSL, VDSL2) modem, as well as an ONT unit terminating the fibre optic line.

The presented embodiments of the invention are purely illustrative and do not limit the claimed invention The scope of protection is only defined by the appended claims.

## Claims

1. A method for verifying a port synchronisation for DSL lines, comprising the following steps executed by a system:
- the port is configured (1) for measurement and information about inactive emergency profiles, that allow to achieve the synchronisation on the line in the case when the standard settings dedicated to provide services do not allow to achieve the synchronisation, is recorded (2) in the system
- then there is read (3a) at least one of such parameters as:
- the number of synchronisation attempts and
- the number of failed synchronisation attempts;
- the time of readings of these parameters is recorded (3b) in a memory;
- so as to determine absence of synchronisation, the values of administrative status, that allow management of resources, and operational status of the port, that indicate if the subscriber line is operating are successively read (4) through the system;
- then value of administrative status and the operational status are checked (5)
- in the event in which administrative status and the operational status are not both "UP" current time is measured (6) and it is checked whether a difference between the current time and the time measured at the step of reading (3a) is smaller than a predefined threshold; and
- if the difference exceeds the predefined threshold, then a parameter of synchronisation attempts pre-selected in step (3a) of reading is re-read (7) and information about absence of synchronisation is transmitted (8) to a unit that issues measurement requests,
- then the read values of parameters from step (3a) of reading and step (7) of re-reading associated with the numbers of synchronisation attempts at different times are compared (9),
- the information about the synchronisation attempts on the port is transmitted (10) along with instructions to the unit that issues measurement requests, and
- it is checked (11) whether the emergency profile is activated on the port, where:
- in the event of a negative result of checking (11) the state of activation of the emergency profile, the emergency profile is activated (12) and the information about activation of the emergency profile is recorded (13) in the system, and the system returns to the step of reading (3a) of the previously selected parameter of the synchronisation attempts and successively repeats the previous steps,
- in the event of a positive result of checking (11) the state of activation of the emergency profile, to the unit that issues measurement requests, along with instructions, there is transmitted (14) the information about the absence of the synchronisation in the emergency profile.

2. The method according to claim 1, **characterised in that** when value of administrative status and the operational status are checked (5) - in the event in which both administrative status and the operational status are "UP" , through the system, it is checked (15) whether the emergency profile is activated, and if the result is negative, to the unit that issues measurement requests there is transmitted (16) the information about obtaining the synchronisation correctly.

3. The method according to claim 1, **characterised in that** in the event of a positive result of the comparison (5), successively, through the system, it is checked (15) whether the emergency profile is activated, and if the result is positive, to the unit that issues measurement requests there is transmitted (17) the information about obtaining the synchronisation with the emergency profile activated.

4. The method according to claim 1, **characterised in that** at the step of comparison (6), when the difference between the current time and the time measured at the step (3a) of reading is smaller than the predefined threshold, then after the predefined period of time the system returns to the step (4) of reading of the previously selected parameter of synchronisation attempts and successively repeats the mentioned steps (4, 5).

5. The method according to claim 4, **characterised in that** a threshold value of 3 minutes is used.

6. The method according to claim 4, **characterised in that** a predefined time of 5 seconds is used.

7. The method according to claim 1, **characterised in that** at the step (9) of comparing the values of the parameters of the synchronisation attempts at different times, the obtained values are compared and when the value measured at a later point in time is different from the earlier value, then to the unit that issues measurement requests, along with instructions, there is transmitted (18) the information about occurrence of the synchronisation attempts.

8. The method according to claim 1, **characterised in that** at the step (9) of comparing the values of the parameters of the synchronisation attempts at different times, the obtained values are compared and when the value measured at a later point in time is equal to the earlier value, then to the unit that issues measurement requests, along with instructions, there is transmitted (19) the information about the absence of the synchronisation attempts.

9. The method according to any one of claims 1-8, **characterised in that** at the step (1) of configuring the port for the measurement, the mode Loop Diagnostic Mode is activated.

10. The method according to any one of claims 1-9, **characterised in that** at the step (1) of configuring the port for the measurement, the port resynchronisation is forced.

11. The method according to any one of claims 1-10, **characterised in that** in the emergency profile, the parameters of minimum uplink and downlink bitrates are reduced to the lowest possible value, while the rest of the parameters of that profile is identical as in the service profiles.

12. The method according to any one of claims 1-11, **characterised in that** in the emergency profile, the parameters of maximum uplink and downlink bitrates are set to the highest possible value, while the rest of the parameters of that profile is identical as in the service profiles.

## Patentansprüche

1. Ein Verfahren für die Überprüfung der Portsynchronisierung für die DSL-Leitungen, das die folgenden durch das System auszuführenden Schritte umfasst:
- der Port wird für die Messung konfiguriert (1) und im System werden Meldungen zu den inaktiven Notfallprofilen aufgezeichnet (2), mit deren Hilfe die Leitung im Fall, wenn die Synchronisierung mit den für diese Dienste dedizierten Standard-Einstellungen nicht möglich ist, synchronisiert werden kann;
- dann wird mindestens einer der folgenden Parameter ausgelesen (3a):
- die Anzahl der Synchronisierungsversuche sowie
- die Anzahl der fehlgeschlagenen Synchronisierungsversuche;
- die Ablesezeit dieser Parameter wird im Speicher aufgezeichnet (3b);
- um die fehlende Synchronisierung zu ermitteln, liest (4) das System nacheinander die Werte des Verwaltungsstatus, der das Ressourcenmanagement ermöglicht, sowie des Betriebsstatus des jeweiligen Ports, der anzeigt, ob die Benutzerleitung gerade im Betrieb ist, ab;
- dann werden die Werte des Verwaltungsstatus und den Betriebsstatus geprüft (5)
- im Fall, wenn der Verwaltungsstatus und der Betriebsstatus nicht beide auf "UP" stehen, wird die aktuelle Zeit gemessen (6) und anschließend findet eine Überprüfung statt, ob der Unterschied zwischen der aktuellen Zeit und der beim Ableseschritt (3a) gemessenen Zeit den vordefinierten Sollwert unterschreitet; und
- wenn der Unterschied den vordefinierten Sollwert überschreitet, dann wird der beim Ableseschritt (3a) vorgegebene Parameter der Synchronisierungsversuche erneut ausgelesen (7) und eine Meldung über die fehlende Synchronisierung an das Gerät geschickt, das die Messabfragen generiert, übermittelt (8),
- anschließend werden die ausgelesenen Werte der Parameter vom Ableseschritt (3a) und vom wiederholten Ableseschritt (7) in Bezug auf die Anzahl der Synchronisierungsversuche zu unterschiedlichen Zeitpunkten miteinander verglichen (9),
- die Meldung über die Synchronisierungsversuche am Port wird zusammen mit weiteren Anweisungen zum Gerät, das die Messabfragen generiert, übermittelt (10), und
- das System prüft (11), ob ein Notfallprofil am jeweiligen Port aktiviert ist, wobei:
- wenn das erzielte Ergebnis der Prüfung (11) des Aktivierungszustands des Notfallprofils negativ ist, dann wird das Notfallprofil aktiviert (12) und eine Aktivierungsmeldung des Notfallprofils wird im System erfasst (13) und das System kehrt zum Ableseschritt (3a) der vorher gewählten Parameter der Synchronisierungsversuche zurück und wiederholt die vorherigen Schritte nacheinander,
- wenn das Ergebnis der Prüfung (11) des Zustands der Aktivierung des Notfallprofils positiv ist, dann wird eine Meldung über fehlende Synchronisierung im Notfallprofil, zusammen mit weiteren Anweisungen, an das Gerät übermittelt (14), das die Messabfragen generiert.

2. Verfahren nach Anspruch 1, **dadurch gekennzeichnet, dass** das System prüft (15), ob ein Notfallprofil aktiviert wurde, wenn der Wert des Verwaltungsstatus und des Betriebsstatus geprüft werden (5) - im Fall also, wenn beide Werte, also der Verwaltungsstatus und der Betriebsstatus auf "UP" sind, und wenn das geprüfte Ergebnis negativ ist, dann wird eine Meldung über das richtige Zustandekommen der Synchronisierung an das Gerät, das die Messabfragen generiert, übermittelt (16).

3. Verfahren nach Anspruch 1, **dadurch gekennzeichnet, dass** das System bei einem positiven Ergebnis des Vergleichs (5) nacheinander prüft (15), ob das Notfallprofil aktiviert wurde, und wenn das Ergebnis positiv ist, dann wird eine Meldung über das Zustandekommen der Synchronisierung mit einem aktivierten Notfallprofil an das Gerät, das die Prüfabfragen generiert, übermittelt (17).

4. Verfahren nach Anspruch 1, **dadurch gekennzeichnet, dass** das System beim Vergleichsschritt (6) nach Ablauf einer vordefinierten Zeit zum Ableseschritt (4) der früher gewählten Parameter der Synchronisierungsversuche zurückkehrt, wenn der Unterschied zwischen der aktuell gemessenen Zeit und der beim Ableseschritt (3a) gemessenen Zeit den vordefinierten Sollwert unterschreitet, und danach die genannten Schritte (4, 5) nacheinander wiederholt.

5. Verfahren nach Anspruch 4, **dadurch gekennzeichnet, dass** ein Sollwert von 3 Minuten verwendet wird.

6. Verfahren nach Anspruch 4, **dadurch gekennzeichnet, dass** eine vordefinierte Zeit von 5 Sekunden verwendet wird.

7. Verfahren nach Anspruch 1, **dadurch gekennzeichnet, dass** die beim Vergleichsschritt (9) ermittelten Werte für Parameter der Synchronisierungsversuche zu verschiedenen Zeitpunkten miteinander verglichen werden, und wenn der am späteren Zeitpunkt gemessene Wert anders ist als der vorangehende Wert, dann wird eine Meldung über das Zustandekommen der Synchronisierungsversuche an das Gerät, das die Messabfragen generiert, mit weiteren Anweisungen, übermittelt (18).

8. Verfahren nach Anspruch 1, **dadurch gekennzeichnet, dass** die beim Vergleichsschritt (9) ermittelten Werte für Parameter der Synchronisierungsversuche zu verschiedenen Zeitpunkten miteinander verglichen werden, und wenn der am späteren Zeitpunkt gemessene Wert identisch ist als der vorangehende Wert, dann wird eine Meldung über das Fehlen der Synchronisierungsversuche an das Gerät, das die Messabfragen generiert, mit weiteren Anweisungen, übermittelt (19).

9. Verfahren nach einem der Ansprüche 1 bis 8, **dadurch gekennzeichnet, dass** die Betriebsart Loop Diagnostic Mode beim Konfigurationsschritt (1) des zu messenden Ports aktiviert wird.

10. Verfahren nach einem der Ansprüche 1 bis 9, **dadurch gekennzeichnet, dass** eine Neusynchronisierung des Ports beim Konfigurationsschritt (1) des zu messenden Ports erzwungen wird.

11. Verfahren nach einem der Ansprüche 1 bis 10, **dadurch gekennzeichnet, dass** die Parameter für minimale Uplink- und Downlink-Bitgeschwindigkeit des Notfallprofils zu dem niedrigsten zulässigen Wert reduziert werden, wobei die restlichen Profilparameter identisch bleiben wie die des Serviceprofils.

12. Verfahren nach einem der Ansprüche 1 bis 11, **dadurch gekennzeichnet, dass** die Parameter für maximale Uplink- und Downlink-Bitgeschwindigkeit des Notfallprofils als der höchste zulässige Werte gesetzt sind, wobei die restlichen Profilparameter identisch bleiben wie die des Serviceprofils.

## Revendications

1. Procédé permettant de vérifier d'une synchronisation de port pour des lignes DSL, comprenant les étapes suivantes exécutées par un système
- le port est configuré (1) pour la mesure et
des informations sur les profils d'urgence inactifs, qui permettent d'effectuer la synchronisation sur la ligne dans le cas où les réglages standard dédiés à la prestation de services ne permettent pas d'effectuer la synchronisation, sont enregistrées (2) dans le système ;
- puis on lit (3a) au moins un des paramètres tels que :
- le nombre de tentatives de synchronisation et
- le nombre de tentatives de synchronisation ayant échoué ;
- le temps de lecture de ces paramètres est enregistrée (3b) dans une mémoire ;
- afin de déterminer l'absence de synchronisation, les valeurs d'état administratif permettant la gestion des ressources et l'état opérationnel du port indiquant si la ligne d'abonné est en service sont lues (4) successivement par le système;
- puis la valeur de l'état administratif et de l'état opérationnel sont vérifiés (5)
- dans le cas où l'état administratif et l'état opérationnel ne sont pas tous deux « UP », le temps actuel est mesurée (6) et il est vérifié si une différence entre le temps actuel et le temps mesuré à l'étape de lecture (3a) est inférieure à un seuil prédéfini ; et
- si la différence dépasse le seuil prédéfini, un paramètre de tentatives de synchronisation présélectionné à l'étape (3a) de lecture est relu (7) et des informations sur l'absence de synchronisation sont transmises (8) à une unité qui émet des demandes de mesure,
- puis les valeurs de lecture des paramètres de l'étape (3a) de lecture et de l'étape (7) de relecture associées au nombre de tentatives de synchronisation à différents moments sont comparées (9),
- les informations sur les tentatives de synchronisation sur le port sont transmises (10) avec des instructions à l'unité qui émet des demandes de mesure et
- il est vérifié (11) si le profil d'urgence est activé sur le port, où :
- en cas de résultat négatif de la vérification (11) de l'état d'activation du profil d'urgence, le profil d'urgence est activé (12) et les informations concernant l'activation du profil d'urgence sont enregistrées (13) dans le système, et le système revient à l'étape de lecture (3a) du paramètre précédemment sélectionné pour les tentatives de synchronisation et répète successivement les étapes précédentes,
- en cas de résultat positif de la vérification (11) de l'état d'activation du profil d'urgence, à l'unité émettrice des demandes de mesure, ainsi que des instructions, sont transmises (14) les informations relatives à l'absence de synchronisation en cas de profil d'urgence.

2. Procédé selon la revendication 1, **caractérisé en ce que** lorsque les valeurs de l'état administratif et de l'état opérationnel sont vérifiées (5) - dans le cas où le l'état administratif et l'état opérationnel sont « UP », via le système, il est vérifié (15) si le profil d'urgence est activé, et si le résultat est négatif, les informations relatives à l'obtention correctement de la synchronisation sont transmises à l'unité émettrice des demandes de mesure (16).

3. Procédé selon la revendication 1, **caractérisé en ce qu'**en cas de résultat positif de la comparaison (5), successivement, via le système, il est vérifié (15) si le profil d'urgence est activé, et si le résultat est positif, à l'unité émettrice des demandes de mesure, il est transmis (17) les informations relatives à l'obtention de la synchronisation avec le profil d'urgence activé.

4. Procédé selon la revendication 1, **caractérisé en ce qu'**à l'étape de comparaison (6), lorsque la différence entre le temps actuel et le temps mesuré à l'étape (3a) de lecture est inférieure au seuil prédéfini, puis après la période du temps prédéfinie, le système revient à l'étape (4) de lecture du paramètre de tentatives de synchronisation précédemment sélectionné et répète successivement les étapes mentionnées (4, 5).

5. Procédé selon la revendication 4, **caractérisé en ce qu'**une valeur seuil de 3 minutes est utilisée.

6. Procédé selon la revendication 4, **caractérisé en ce qu'**une durée prédéfinie de 5 secondes est utilisée.

7. Procédé selon la revendication 1, **caractérisé en ce qu'**à l'étape (9) de comparaison des valeurs des paramètres des tentatives de synchronisation à des temps différents, les valeurs obtenues sont comparées et lorsque la valeur mesurée à un instant ultérieur est différente de la valeur précédente, puis à l'unité émettrice des demandes de mesure, avec les instructions, il est transmis (18) les informations relatives à l'occurrence des tentatives de synchronisation.

8. Procédé selon la revendication 1, **caractérisé en ce qu'**à l'étape (9) de comparaison des valeurs des paramètres des tentatives de synchronisation à des moments différents, les valeurs obtenues sont comparées et lorsque la valeur mesurée à un instant ultérieur est égale à la valeur précédente, puis à l'unité émettrice des demandes de mesure, avec les instructions, il est transmis (19) les informations relatives à l'absence des tentatives de synchronisation.

9. Procédé selon l'une quelconque des revendications 1 à 8, **caractérisé en qu'**à l'étape (1) de configuration du port pour la mesure, le mode Loop Diagnostic Mode est activé.

10. Procédé selon l'une quelconque des revendications 1 à 9, **caractérisé en qu**'à l'étape (1) de configuration du port pour la mesure, la resynchronisation du port est forcée.

11. Procédé selon l'une quelconque des revendications 1 à 10, **caractérisé en que** dans le profil d'urgence, les paramètres des débits minimaux de liaison montante et de liaison descendante sont réduits à la valeur la plus basse possible, tandis que le reste des paramètres de ce profil est identique à celui des profils de service.

12. Procédé selon l'une quelconque des revendications 1 à 11, **caractérisé en que** dans le profil d'urgence, les paramètres des débits binaires maximaux des liaisons montante et descendante sont réglés sur la valeur la plus élevée possible, tandis que les autres paramètres de ce profil sont identiques à ceux des profils de service.
